# EUROPÄISCHE PATENTANMELDUNG

(11) **EP 4 686 582 A1**
(43) Veröffentlichungstag der Anmeldung: **04.02.2026**
(21) Anmeldenummer: 25192214.2
(22) Anmeldetag: 28.07.2025
(51) Int. Cl.: B60C 1/00, C08K 3/36

(54) **ZUSAMMENSETZUNG FÜR EINEN FAHRRADSCHLAUCH, FAHRRADSCHLAUCH SOWIE VERWENDUNG EINER ZUSAMMENSETZUNG FÜR EINEN FAHRRADSCHLAUCH**

(30) Priorität: 29.07.2024 DE 102024121529
(71) Anmelder: Ralf Bohle GmbH, 51580 Reichshof (DE); PT. Hung-A Indonesia, 17550 Bekasi West Java (ID)
(72) Erfinder: Chungseok, Oh, 17550 Bekasi (ID); Hyunchang, Song, 17550 Bekasi (ID); Yongjoo, Park, 840000 Go Dau, Tay Ninh (VN); Bogdahn, Sebastian, 51069 Köln (DE); Kleese, Sebastian, 51491 Overath (DE)
(74) Vertreter: Patentanwälte Ruff, Wilhelm, Beier, Dauster & Partner mbB

(57) **Zusammenfassung**

Die Erfindung betrifft eine Zusammensetzung für einen Fahrradschlauch, enthaltend
- einen Synthesekautschuk und
- zurückgewonnenen Ruß,
wobei der zurückgewonnene Ruß einen Anteil von ≤ 50 Gew.-% aufweist, bezogen auf das Gesamtgewicht von in der Zusammensetzung enthaltenen Füllstoffen.

Weiter betrifft die Erfindung einen Fahrradschlauch, der obige Zusammensetzung aufweist, sowie die Verwendung obiger Zusammensetzung für einen Fahrradschlauch.

## Beschreibung

### ANWENDUNGSGEBIET UND STAND DER TECHNIK

Die Erfindung betrifft eine Zusammensetzung, insbesondere für einen Fahrradschlauch, Laufradschlauch, Kinderwagenreifenschlauch oder Rollstuhlreifenschlauch. Weiter betrifft die Erfindung einen Fahrradschlauch, einen Laufradschlauch, einen Kinderwagenreifenschlauch und einen Rollstuhlreifenschlauch sowie die Verwendung der Zusammensetzung für einen Fahrradschlauch, Laufradschlauch, Kinderwagenreifenschlauch oder Rollstuhlreifenschlauch.

Eine Kautschukmischung für einen Schlauch von Fahrzeugluftreifen ist aus der EP 3 327 079 B1 bekannt. Die dort beschriebene Zusammensetzung weist als Hauptfüllstoff sogenannten Pyrolyse-Ruß auf.

Grundsätzlich kann jedoch jede Art von Füllstoff zu Verunreinigungen bei Schläuchen führen. Diese Verunreinigungen können mitunter zu Füllstoffverteilungsgradienten und somit zu partiellen "Schwachstellen" führen. In der Folge kann es an diesen Schlauchstellen bei dynamischer und/oder thermischer Beanspruchung zu Defekten, beispielsweise in Form von Versprödungen, kommen. Dies wiederum kann die Pannensicherheit des Schlauches sowie dessen Gebrauchsfähigkeit deutlich beeinträchtigen. Dies gilt insbesondere für den Fall, dass der Schlauch bei einem Fahrrad mit Felgenbremsen eingesetzt und bei Bremsvorgängen thermisch belastet wird.

### AUFGABE UND LÖSUNG

Der Erfindung liegt daher als Aufgabe die Bereitstellung einer Zusammensetzung zugrunde, die aus dem Stand der Technik bekannte Nachteile umgeht, insbesondere die Herstellung eines Fahrradschlauches mit verbesserter Luftdichtigkeit und insbesondere unter ressourcenschonenden Bedingungen erlaubt. Weiter liegt der Erfindung die Bereitstellung eines entsprechenden Fahrradschlauches sowie die Verwendung einer Zusammensetzung für einen Fahrradschlauch zugrunde.

Die Erfindung löst diese Aufgaben insbesondere durch die Bereitstellung einer Zusammensetzung für einen Fahrradschlauch gemäß Beschreibung, durch einen Fahrradschlauch gemäß unabhängigem Anspruch 1 sowie durch die Verwendung einer Zusammensetzung gemäß Beschreibung. Bevorzugte Ausgestaltungen der Erfindung sind in den abhängigen Ansprüchen beschrieben. Der Wortlaut sämtlicher Ansprüche wird hiermit durch ausdrückliche Bezugnahme zum Inhalt der Beschreibung gemacht. Weitere erfindungsgemäße Lösungen sind in der Beschreibung offenbart.

Gemäß einem ersten Aspekt betrifft die Erfindung eine Zusammensetzung, insbesondere für einen Fahrradschlauch, Laufradschlauch, Kinderwagenreifenschlauch oder Rollstuhlreifenschlauch.

Die Zusammensetzung enthält Folgendes:
- einen Synthesekautschuk und
- zurückgewonnenen oder recycelten Ruß.

Die Zusammensetzung zeichnet sich insbesondere dadurch aus, dass der zurückgewonnene bzw. recycelte Ruß einen Anteil von ≤ 50 Gew.-%, d. h. 50 Gew.-% oder < 50 Gew.-%, insbesondere < 45 Gew.-%, bevorzugt < 40 Gew.-%, weiter bevorzugt < 30 Gew.-%, besonders bevorzugt < 25 Gew.-%, aufweist, bezogen auf das Gesamtgewicht von in der Zusammensetzung enthaltenen Füllstoffen.

Unter dem Ausdruck "Zusammensetzung" soll im Sinne der vorliegenden Erfindung eine Zusammensetzung verstanden werden, die insbesondere zur Herstellung, insbesondere Ausformung, eines Fahrradschlauches, Laufradschlauches, Kinderwagenreifenschlauches und/oder Rollstuhlreifenschlauches geeignet ist. Nach seiner Herstellung, insbesondere Ausformung, mit Hilfe der Zusammensetzung wird der Schlauch üblicherweise, insbesondere mit Hilfe eines geeigneten Polymers oder Polymermaterials, insbesondere in Form einer Gummimischung, mit einem Ventil verbunden.

Der Ausdruck "bezogen auf das Gesamtgewicht von in der Zusammensetzung enthaltenen Füllstoffen" bedeutet im Sinne der vorliegenden Erfindung "bezogen auf das Gesamtgewicht aller in der Zusammensetzung enthaltenen Füllstoffe.

Unter dem Ausdruck "Fahrradschlauch" soll im Sinne der vorliegenden Erfindung ein luftdichter Schlauch verstanden werden, der bei der Bereifung von Fahrrädern als Luftbehälter dient.

Unter dem Ausdruck "Fahrrad" soll im Sinne der vorliegenden Erfindung ein mindestens zweirädriges, für gewöhnlich einspuriges Landfahrzeug verstanden werden, das entweder ausschließlich durch die Muskelkraft auf ihm befindlicher Personen durch das Treten von Pedalen oder Handkurbeln oder durch die Muskelkraft auf ihm befindlicher Personen durch das Treten von Pedalen oder Handkurbeln sowie mit Unterstützung eines elektrischen Hilfsmotors angetrieben wird.

Dementsprechend kann es sich bei dem Fahrrad im Sinne der vorliegenden Erfindung um ein Nicht-Elektrofahrrad, insbesondere für Erwachsene oder Kinder (sogenanntes Kinderfahrrad), ein Elektrofahrrad (E-Bike oder Pedelec), insbesondere für Erwachse oder Kinder (sogenanntes Kinderelektrofahrrad), oder ein Liegerad, insbesondere Liegezweirad oder Liegedreirad, handeln.

Unter dem Ausdruck "Laufradschlauch" soll im Sinne der vorliegenden Erfindung ein luftdichter Schlauch verstanden werden, der bei der Bereifung von Laufrädern als Luftbehälter dient.

Unter dem Ausdruck "Laufrad" sollen im Sinne der vorliegenden Erfindung ein Rad ohne Pedalen oder Handkurbeln verstanden werden.

Unter dem Ausdruck "Kinderwagenreifenschlauch" soll im Sinne der vorliegenden Erfindung ein luftdichter Schlauch verstanden werden, der bei der Bereifung von Kinderwagen als Luftbehälter dient.

Unter dem Ausdruck "Kinderwagen" soll im Sinne der vorliegenden Erfindung ein Transportmittel verstanden werden, mit dem Säuglinge und Kleinkinder im Liegen oder im Sitzen befördert werden,

Unter dem Ausdruck "Rollstuhlreifenschlauch" soll im Sinne der vorliegenden Erfindung ein luftdichter Schlauch verstanden werden, der bei der Bereifung von Rollstühlen als Luftbehälter dient.

Unter dem Ausdruck "Rollstuhl" soll im Sinne der vorliegenden Erfindung ein Hilfsmittel für Menschen verstanden werden, die aufgrund einer körperlichen Behinderung in der Fähigkeit zum Gehen beeinträchtigt sind.

Unter dem Ausdruck "zurückgewonnener Ruß" bzw. "recycelter Ruß" - auf Englisch: recovered Carbon Black (rCB) - soll im Sinne der vorliegenden Erfindung ein Ruß gemäß ASTM D8178 verstanden werden, d.h. ein Feststoff, der durch thermische Zersetzung aus rußhaltigen Gummiprodukten gewonnen wird, frei von Drähten und Geweben ist und in gemahlener Form typischerweise für halbverstärkende Eigenschaften in Gummizusammensetzungen verantwortlich ist. Insbesondere soll unter dem Ausdruck "zurückgewonnener Ruß" bzw. "recycelter Ruß" im Sinne der vorliegenden Erfindung ein mittels Reifen-Pyrolyse, bevorzugt Pyrolyse von Personenkraftwagen-Reifen (PKW-Reifen) und/oder Lastkraftwagen-Reifen (LKW-Reifen) und/oder Fahrradreifen, und/oder Pyrolyse von vulkanisierten Produktionsabfällen aus der Reifenherstellung und/oder Pyrolyse von Schläuchen, insbesondere PKW-Schläuchen und/oder LKW-Schläuchen und/oder Fahrradschläuchen, hergestellter Ruß verstanden werden. Bei den Reifen handelt es sich üblicherweise um Altreifen (sogenannte Altreifen-Pyrolyse). Bei der Reifen-Pyrolyse werden Reifen unter Zufuhr von Hitze bzw. bei hohen Temperaturen und, insbesondere weitgehend, unter Ausschluss von Sauerstoff thermo-chemisch zersetzt. Als Produkte entstehen ein Pyrolysegas, ein Pyrolyseöl (kondensierbare Gasfraktion) sowie zurückgewonnener bzw. recycelter Ruß als Feststoff. Der zurückgewonnene bzw. recycelte Ruß kann im Sinne der vorliegenden Erfindung daher auch als Pyrolyse-Ruß bezeichnet werden.

Unter dem Ausdruck "Füllstoff' soll im Sinne der vorliegenden Erfindung ein Material verstanden werden, welches in der Zusammensetzung enthalten ist, um Eigenschaften, beispielsweise mechanischen Eigenschaften wie Rollwiderstand, Hafteigenschaft, Abriebfestigkeit und/oder Wärmebeständigkeit, eines mit Hilfe der Zusammensetzung hergestellten Endprodukts, wie insbesondere Fahrradschlauches, zu verbessern.

Die Erfindung basiert insbesondere auf der überraschenden Erkenntnis, dass aus einer synthesekautschukhaltigen Zusammensetzung mit einem Anteil an zurückgewonnenem bzw. recyceltem Ruß Fahrradschläuche mit verbesserter Luftdichtigkeit herstellbar sind, wobei hierfür deutlich geringere Anteile an zurückgewonnenem bzw. recyceltem Ruß erforderlich sind, als im Stand der Technik gelehrt wird.

Die Verwendung geringer Anteile an zurückgewonnenem bzw. recyceltem Ruß hat zudem den Vorteil, dass das Risiko einer Versprödung und mithin eines Aufreißens des Fahrradschlauches gesenkt werden kann.

Insgesamt leistet die Erfindung daher einen wertvollen Beitrag für die Herstellung von nutzerfreundlichen und sicheren Fahrradschläuchen.

Der zurückgewonnene bzw. recycelte Ruß kann einen Aschegehalt von 13 Gew.-% bis 28 Gew.-%, bevorzugt 15 Gew.-% bis 25 Gew.-%, insbesondere 17 Gew.-% bis 22 Gew.-% aufweisen, bezogen auf das Gesamtgewicht des zurückgewonnenen bzw. recycelten Rußes. Der Aschegehalt des zurückgewonnen bzw. recycelten Rußes kann beispielsweise mittels thermogravimetrischer Analyse (TGA) gemäß ASTM D8474 bestimmt werden.

Weiter kann der zurückgewonnene bzw. recycelte Ruß einen Schwefelanteil von 0,5 Gew.-% bis 5 Gew.-%, insbesondere 1 Gew.-% bis 4 Gew.-%, bevorzugt 1,5 Gew.-% bis 3,5 Gew.-%, aufweisen, bezogen auf das Gesamtgewicht des zurückgewonnen bzw. recycelten Rußes. Der Schwefelanteil des zurückgewonnenen bzw. recycelten Rußes kann mit Hilfe eines Elementaranalysators gemäß ASTM D4239 bestimmt werden.

Weiter kann der zurückgewonnene bzw. recycelte Ruß einen Kohlenstoffanteil von 70 Gew.-% bis 99 Gew.-%, bevorzugt 70 Gew.-% bis 95 Gew.-%, insbesondere 70 Gew.-% bis 90 Gew.-%, aufweisen, bezogen auf das Gesamtgewicht des zurückgewonnenen bzw. recycelten Rußes. Der Kohlenstoffanteil des zurückgewonnenen bzw. recycelten Rußes kann mit Hilfe eines Elementaranalysators, beispielsweise nach Norm DIN 51732, bestimmt werden.

Weiter kann der zurückgewonnene bzw. recycelte Ruß einen mittleren Partikeldurchmesser, insbesondere bestimmt mittels Laserbeugung gemäß ASTM WK87480, von 0,5 µm bis 30 µm, insbesondere 1 µm bis 25 µm, bevorzugt 5 µm bis 20 µm, aufweisen.

Grundsätzlich kann der zurückgewonnene bzw. recycelte Ruß eine spezifische Oberfläche, bestimmt nach der Methode von Brunauer, Emmett & Teller (BET) gemäß der Norm ASTM D6556, von 40 m²/g bis 500 m²/g oder mehr, insbesondere 40 m²/g bis 400 m²/g oder mehr, aufweisen. Bevorzugt weist der zurückgewonnene bzw. recycelte Ruß eine spezifische Oberfläche, bestimmt nach der Methode von Brunauer, Emmett & Teller (BET) gemäß der Norm ASTM D6556, von 40 m²/g bis 80 m²/g, insbesondere 45 m²/g bis 55 m²/g, auf. Vorzugsweise wird die spezifische Oberfläche in einem BET-Messgerät mittels Stickstoffadsorption gemessen.

In Ausgestaltung der Erfindung weist der zurückgewonnene bzw. recycelte Ruß einen Anteil von 5 Gew.-% bis 35 Gew.-%, insbesondere 10 Gew.-% bis 30 Gew.-%, bevorzugt 15 Gew.-% bis 25 Gew.-%, besonders bevorzugt 17 Gew.-% bis 22 Gew.-%, auf, bezogen auf das Gesamtgewicht von in der Zusammensetzung enthaltenen Füllstoffen.

Bezogen auf das Gesamtgewicht der Zusammensetzung kann der zurückgewonnene bzw. recycelte Ruß einen Anteil von 2 Gew.-% bis 12 Gew.-%, insbesondere 4 Gew.-% bis 10 Gew.-%, vorzugsweise 5 Gew.-% bis 8 Gew.-%, aufweisen.

In weiterer Ausgestaltung der Erfindung enthält die Zusammensetzung ferner Industrieruß als weiteren Füllstoff.

Unter dem Ausdruck "Industrieruß" soll im Sinne der vorliegenden Erfindung ein Ruß verstanden werden, der als Industrie-Grundstoff und nicht mittels Pyrolyse von Reifen, insbesondere PKW-Reifen und/oder LKW-Reifen und/oder Fahrradreifen, und/oder Pyrolyse von vulkanisierten Produktionsabfällen aus der Reifenherstellung und/oder Pyrolyse von Schläuchen, insbesondere PKW-Schläuchen und/oder LKW-Schläuchen und/oder Fahrradschläuchen, hergestellt ist. Beispielsweise kann es sich bei dem Industrieruß um einen Acetylenruß, Thermalruß, Channelruß, Flammruß, Gasruß oder Furnaceruß oder um eine Kombination von wenigstens zwei der vorgenannten Rußarten handeln.

Unter dem Ausdruck "Acetylenruß" soll im Sinne der vorliegenden Erfindung ein durch unvollständige Verbrennung von Acetylen gewonnener Ruß verstanden werden.

Unter dem Ausdruck "Thermalruß" soll im Sinne der vorliegenden Erfindung ein Ruß verstanden werden, der in einem diskontinuierlichen oder zyklischen Prozess in speziellen Öfen entsteht, bei dem Erdgas, Methan oder Mineralöle als Rohstoff(e) eingesetzt wird/werden.

Unter dem Ausdruck "Channelruß" soll im Sinne der vorliegenden Erfindung ein Ruß verstanden werden, bei dem Erdgas in vielen kleinen leuchtenden Flammen gegen wassergekühlte Eisenrinnen (Channels) verbrannt wird.

Unter dem Ausdruck "Flammruß" soll im Sinne der vorliegenden Erfindung ein Ruß verstanden werden, zu dessen Herstellung harzreiche Hölzer verbrannt werden.

Unter dem Ausdruck "Gasruß" soll im Sinne der vorliegenden Erfindung ein Ruß verstanden werden, der mittels eines Verfahrens hergestellt wird, bei dem ein wasserstoffhaltiges Gas über erhitztes aromatenreiches Öl, in der Regel Steinkohlen-Teeröle, geführt wird und ein so mit Öldämpfen gesättigtes Trägergas mit einem vor einer wassergekühlten Walze sitzenden Brenner verbrannt wird.

Unter dem Ausdruck "Furnaceruß" soll im Sinne der vorliegenden Erfindung ein durch unvollständige Verbrennung der schweren Fraktionen der Erdöldestillation oder aus der Destillation von Steinkohlenteer hergestellter Ruß verstanden werden.

In weiterer Ausgestaltung der Erfindung weist der Industrieruß einen Anteil von 65 Gew.-% bis 95 Gew.-%, insbesondere 70 Gew.-% bis 90 Gew.-%, bevorzugt 25 Gew.-% bis 85 Gew.-%, besonders bevorzugt 78 Gew.-% bis 83 Gew.-%, auf, bezogen auf das Gesamtgewicht von in der Zusammensetzung enthaltenen Füllstoffen.

Bezogen auf das Gesamtgewicht der Zusammensetzung kann der Industrieruß einen Anteil von 20 Gew.-% bis 32 Gew.-%, insbesondere 24 Gew.-% bis 30 Gew.-%, vorzugsweise 25 Gew.-% bis 28 Gew.-%, aufweisen.

Ein weiterer Vorteil der Erfindung liegt darin, dass durch die erfindungsgemäß vorgesehene Anwesenheit von zurückgewonnenem bzw. recyceltem Ruß in der Zusammensetzung mögliche Anteile von Industrieruß geringer ausfallen können. Dies wiederum erlaubt eine Verringerung der Abhängigkeit von fossilen Rohstoffquellen. Somit leistet die Erfindung vorteilhafterweise auch einen Beitrag zum Umweltschutz sowie zur Ressourcenschonung.

Weiter kann der Industrieruß einen mittleren Partikeldurchmesser, insbesondere bestimmt mittels Laserbeugung oder Scheibenzentrifuge, von 10 nm bis 400 nm, insbesondere 20 nm bis 100 nm, bevorzugt 25 nm bis 60 nm, aufweisen.

Grundsätzlich kann die Zusammensetzung ferner, insbesondere neben dem zurückgewonnenen Ruß und dem Industrieruß, einen weiteren Füllstoff, insbesondere Aluminiumhydroxid, Talkum, Ton, Graphit, Glimmer oder Mischungen von wenigstens zwei der vorgenannten weiteren Füllstoffe, bevorzugt ein Schichtsilikat, wie beispielsweise Talkum oder Kaolinit, aufweisen. Dies hat prinzipiell den Vorteil, dass hierdurch Anteile von Industrieruß in der Zusammensetzung zusätzlich verringert werden können, was unter Umweltschutz- sowie Ressourcenschonungsgesichtspunkten eine weitere Optimierung der Zusammensetzung darstellt. Insbesondere kann der weitere Füllstoff einen Anteil von 10 Gew.-% bis 18 Gew.-%, insbesondere 12 Gew.-% bis 16 Gew.-%, bevorzugt 13 Gew.-% bis 15 Gew.-%, aufweisen, bezogen auf das Gesamtgewicht von in der Zusammensetzung enthaltenen Füllstoffen. Ferner kann der weitere Füllstoff einen mittleren Partikeldurchmesser, insbesondere bestimmt mittels Laserbeugung, Siebanalyse, Sedimentation oder Mikroskopie, von 1 µm bis 75 µm, insbesondere 2 µm bis 35 µm, bevorzugt 5 µm bis 15 µm, aufweisen.

In weiterer Ausgestaltung der Erfindung ist die Zusammensetzung frei von einem Schichtsilikat, wie insbesondere Talkum und/oder Kaolinit, bevorzugt frei von einem weiteren Füllstoff. Insbesondere kann die Zusammensetzung abgesehen von dem zurückgewonnenen bzw. recycelten Ruß und dem Industrieruß frei von einem weiteren Füllstoff sein. Dadurch kann mit besonderem Vorteil das Risiko einer Versprödung eines mithilfe der erfindungsgemäßen Zusammensetzung hergestellten Fahrradschlauches zusätzlich reduziert werden.

In weiterer Ausgestaltung der Erfindung ist der Synthesekautschuk ausgewählt aus der Gruppe bestehend aus Butylkautschuk, Halobutylkautschuk, Kautschuke auf Dienbasis, Kautschuk auf Isoprenbasis, Butadienkautschuk, Styrol-Butadien-Kautschuk, Styrol-Isopren-Butadien-Kautschuk, Chloroprenkautschuk, Acrylnitril-Butadien-Kautschuk, Kautschuke auf Nicht-DienBasis, hydrierter Nitrilkautschuk, Ethylen-Propylen-Kautschuk, Silikonkautschuk, Polyethylenchlorid-Kautschuk, Fluorkautschuk, Acrylkautschuk, epoxidierter Naturkautschuk, Naturlatex, hydrierter Naturkautschuk, gepfropfter Naturkautschuk und Mischungen von wenigstens zwei der vorgenannten Synthesekautschuke.

Unter dem Ausdruck "Butylkautschuk" soll im Sinne der vorliegenden Erfindung ein Isobuten-Isopren-Kautschuk verstanden werden. Bevorzugt weist der Isobuten-Isopren-Kautschuk (Copolymerisat) 95 bis 99 Molprozent Isobuteneinheiten und 1-5 Molprozent Isopreneinheiten auf.

Unter dem Ausdruck "Halobutylkautschuk" soll im Sinne der vorliegenden Erfindung ein durch Halogenierung von Butylkautschuk hergestellter Synthesekautschuk verstanden werden. Bei dem Halobutylkautschuk kann es sich insbesondere um chlorierten und/oder bromierten Butylkautschuk handeln.

In weiterer Ausgestaltung der Erfindung handelt es sich bei dem Synthesekautschuk um Butylkautschuk.

In weiterer Ausgestaltung der Erfindung weist der Synthesekautschuk einen Anteil von 40 Gew.-% bis 70 Gew.-%, insbesondere 45 Gew.-% bis 65 Gew.-%, bevorzugt 50 Gew.-% bis 55 Gew.-%, auf, bezogen auf das Gesamtgewicht der Zusammensetzung.

In weiterer Ausgestaltung der Erfindung weist die Zusammensetzung ferner ein Dispergiermittel auf. Dadurch kann vorteilhafterweise eine gleichmäßigere Verteilung von in der Zusammensetzung anwesenden Füllstoffen erzielt und somit die Luftdichtigkeit eines mithilfe der Zusammensetzung hergestellten Fahrradschlauches verbessert werden. Gleichzeitig kann die Gefahr eines Defekts, insbesondere in Form einer Versprödung, des Schlauches aufgrund lokaler "Füllstoffüberkonzentrationen" im Schlauch vermieden werden.

In weiterer Ausgestaltung der Erfindung handelt es sich bei dem Dispergiermittel um ein Polyethylenglykol. Insoweit stellte sich überraschenderweise heraus, dass Polyethylenglykol zur Erzielung einer gleichmäßigen Verteilung bzw. Dispergierung des zurückgewonnenen bzw. recycelten Rußes und mithin für die Herstellung eines Fahrradschlauches mit verbesserter Luftdichtigkeit besonders geeignet ist.

Prinzipiell kann das Polyethylenglykol eine mittlere Molekülmasse von 200 (gesprochen: zweihundert) g/mol bis 20.000 (gesprochen: zwanzigtausend) g/mol aufweisen. Insbesondere kann das Polyethylenglykol eine mittlere Molekülmasse von 1.000 (gesprochen: tausend) g/mol bis 15.000 (gesprochen: fünfzehntausend) g/mol, insbesondere 2.000 (gesprochen: zweitausend) g/mol bis 10.000 (gesprochen: zehntausend) g/mol, vorzugsweise 3.000 (gesprochen: dreitausend) g/mol bis 7.000 (gesprochen: siebentausend) g/mol, aufweisen. Vorzugsweise handelt es sich bei dem Polyethylenglykol um Polyethylenglykol 4.000 (gesprochen: viertausend), d. h. um ein Polyethylenglykol mit einer mittleren Molekülmasse von 4.000 (gesprochen: viertausend) g/mol.

In weiterer Ausgestaltung der Erfindung weist das Dispergiermittel einen Anteil von 0,1 Gew.-% bis 2 Gew.-%, insbesondere 0,2 Gew.-% bis 1 Gew.-%, bevorzugt 0,4 Gew.-% bis 0,8 Gew.-%, besonders bevorzugt 0,4 Gew.-% bis 0,6 Gew.-%, auf, bezogen auf das Gesamtgewicht der Zusammensetzung.

Ferner kann die Zusammensetzung weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile aufweisen.

Die Vulkanisationsmittel können insbesondere ausgewählt sein aus der Gruppe bestehend aus organischem Peroxid, Vulkanisiermittel auf Schwefelbasis (wie Schwefel und/oder Morpholindisulfid), Harzvulkanisiermittel, Metalloxid (wie Magnesiumoxid) und Mischungen von wenigstens zwei der vorgenannten Vulkanisationsmittel.

Die Vulkanisationsbeschleuniger können insbesondere ausgewählt sein aus der Gruppe bestehend aus Vulkanisationsbeschleuniger auf Sulfenamidbasis, Vulkanisationsbeschleuniger auf Thiazolbasis, Vulkanisationsbeschleuniger auf Thiurambasis, Vulkanisationsbeschleuniger auf Thioharnstoffbasis, Vulkanisationsbeschleuniger auf Guanidinbasis, Vulkanisationsbeschleuniger auf Dithiocarbaminsäurebasis, Vulkanisationsbeschleuniger auf Aldehydaminbasis, Vulkanisationsbeschleuniger auf Aldehydammoniakbasis, Vulkanisationsbeschleuniger auf Imidazolinbasis, Vulkanisationsbeschleuniger auf Xanthatbasis und Mischungen von wenigstens zwei der vorgenannten Vulkanisationsbeschleuniger.

Geeignete Vulkanisationsbeschleuniger auf Sulfenamidbasis können ausgewählt sein aus der Gruppe bestehend aus N-tert-Butyl-2-benzothiazolylsulfenamid (TBBS), N-Cyclohexyl-2-benzothiazolylsulfenamid (CBS), N,N'-Dicyclohexyl-2-benzothiazolylsulfenamid (DZ) und Mischungen von wenigstens zwei der vorgenannten Vulkanisationsbeschleuniger auf Sulfenamidbasis. Geeignete Vulkanisationsbeschleuniger auf Thiurambasis können ausgewählt sein aus der Gruppe bestehend aus Tetramethylthiurammonosulfid, Tetramethylthiuramdisulfid, Tetrabenzylthiuramdisulfid (TBzTD) und Mischungen von wenigstens zwei der vorgenannten Vulkanisationsbeschleuniger auf Thiurambasis. Geeignete Vulkanisationsbeschleuniger auf Guanidinbasis können ausgewählt sein aus der Gruppe bestehend aus 1,3-Diphenylguanidin (DPG), Diorthotrilguanidin, Orthotrilbiguanidin und Mischungen von wenigstens zwei der vorgenannten Vulkanisationsbeschleuniger auf Guanidinbasis.

Die Prozesshilfen können insbesondere ausgewählt sein aus der Gruppe bestehend aus Fettsäuren, Fettsäurederivate, Polyorganosiloxane, Silane und Mischungen von wenigstens zwei der vorgenannten Prozesshilfen.

Die Prozessöle können insbesondere ausgewählt sein aus der Gruppe bestehend aus paraffinischen Prozessölen, aromatischen Prozessölen, naphthenischen Prozessölen, pflanzlichen Prozessölen und Mischungen von wenigstens zwei der vorgenannten Prozessöle. Bei den pflanzlichen Prozessölen kann es sich insbesondere um Triglyceride, wie beispielsweise Sojaöl, handeln.

Die Alterungsschutzmittel können insbesondere ausgewählt sein aus der Gruppe bestehend aus Antioxidantien auf Chinolinbasis, Antioxidantien auf Chinonbasis, Antioxidantien auf Phenolbasis, Antioxidantien auf Phenylendiaminbasis, Carbaminsäuremetallsalze und Mischungen von wenigstens zwei der vorgenannten Alterungsschutzmittel.

Die Wachse können insbesondere ausgewählt sein aus der Gruppe bestehend aus Wachsen auf Erdölbasis, Wachse auf Mineralbasis, synthetische Wachse und Mischungen von wenigstens zwei der vorgenannten Wachse.

Die weiteren Bestandteile können insgesamt, d.h. alle weiteren Bestandteile zusammen, einen Anteil von 4 Gew.-% bis 18 Gew.-%, insbesondere 6 Gew.-% bis 15 Gew.-%, bevorzugt 9 Gew.-% bis 13 Gew.-%, aufweisen, bezogen auf das Gesamtgewicht der Zusammensetzung.

In weiterer Ausgestaltung der Erfindung enthält die Zusammensetzung Folgendes:
- Butylkautschuk,
- zurückgewonnenen Ruß,
- Industrieruß,
- Polyethylenglykol 4.000 und
- optional weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile.

Bevorzugt weist die Zusammensetzung folgende Bestandteile auf oder besteht die Zusammensetzung aus folgenden Bestandteilen:
- 40 Gew.-% bis 70 Gew.-% Butylkautschuk, bezogen auf das Gesamtgewicht der Zusammensetzung,
- 5 Gew.-% bis 35 Gew.-% zurückgewonnenen Ruß, bezogen auf das Gesamtgewicht von in der Zusammensetzung enthaltenen Füllstoffen,
- 65 Gew.-% bis 95 Gew.-% Industrieruß, bezogen auf das Gesamtgewicht von in der Zusammensetzung enthaltenen Füllstoffen,
- 0,1 Gew.-% bis 2 Gew.-% Polyethylenglykol, insbesondere Polyethylenglykol 4.000, bezogen auf das Gesamtgewicht der Zusammensetzung, und
- optional 4 Gew.-% bis 18 Gew.-% weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile, bezogen auf das Gesamtgewicht der Zusammensetzung.

Weiter bevorzugt weist die Zusammensetzung folgende Bestandteile auf oder besteht die Zusammensetzung aus folgenden Bestandteilen:
- 40 Gew.-% bis 70 Gew.-% Butylkautschuk, bezogen auf das Gesamtgewicht der Zusammensetzung,
- 10 Gew.-% bis 30 Gew.-% zurückgewonnenen Ruß, bezogen auf das Gesamtgewicht von in der Zusammensetzung enthaltenen Füllstoffen,
- 70 Gew.-% bis 90 Gew.-% Industrieruß, bezogen auf das Gesamtgewicht von in der Zusammensetzung enthaltenen Füllstoffen,
- 0,2 Gew.-% bis 1 Gew.-% Polyethylenglykol, insbesondere Polyethylenglykol 4.000, bezogen auf das Gesamtgewicht der Zusammensetzung, und
- optional 4 Gew.-% bis 18 Gew.-% weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile, bezogen auf das Gesamtgewicht der Zusammensetzung.

Weiter bevorzugt weist die Zusammensetzung folgende Bestandteile auf oder besteht die Zusammensetzung aus folgenden Bestandteilen:
- 45 Gew.-% bis 65 Gew.-% Butylkautschuk, bezogen auf das Gesamtgewicht der Zusammensetzung,
- 15 Gew.-% bis 25 Gew.-% zurückgewonnenen Ruß, bezogen auf das Gesamtgewicht von in der Zusammensetzung enthaltenen Füllstoffen,
- 75 Gew.-% bis 85 Gew.-% Industrieruß, bezogen auf das Gesamtgewicht von in der Zusammensetzung enthaltenen Füllstoffen,
- 0,2 Gew.-% bis 1 Gew.-% Polyethylenglykol, insbesondere Polyethylenglykol 4.000, bezogen auf das Gesamtgewicht der Zusammensetzung, und
- optional 6 Gew.-% bis 15 Gew.-% weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile, bezogen auf das Gesamtgewicht der Zusammensetzung.

Weiter bevorzugt weist die Zusammensetzung folgende Bestandteile auf oder besteht die Zusammensetzung aus folgenden Bestandteilen:
- 50 Gew.-% bis 55 Gew.-% Butylkautschuk, bezogen auf das Gesamtgewicht der Zusammensetzung,
- 17 Gew.-% bis 22 Gew.-% zurückgewonnenen Ruß, bezogen auf das Gesamtgewicht von in der Zusammensetzung enthaltenen Füllstoffen,
- 78 Gew.-% bis 83 Gew.-% Industrieruß, bezogen auf das Gesamtgewicht von in der Zusammensetzung enthaltenen Füllstoffen,
- 0,2 Gew.-% bis 1 Gew.-% Polyethylenglykol, insbesondere Polyethylenglykol 4.000, bezogen auf das Gesamtgewicht der Zusammensetzung, und
- optional 9 Gew.-% bis 13 Gew.-% weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile, bezogen auf das Gesamtgewicht der Zusammensetzung.

In weiterer Ausgestaltung der Erfindung enthält die Zusammensetzung auf 100 Gew.-%, d.h. bezogen auf das Gesamtgewicht der Zusammensetzung, Folgendes oder besteht die Zusammensetzung auf 100 Gew.-%, d.h. bezogen auf das Gesamtgewicht der Zusammensetzung, aus folgenden Bestandteilen:
- 50 Gew.-% bis 55 Gew.-% Butylkautschuk,
- 5 Gew.-% bis 8 Gew.-% zurückgewonnenen Ruß,
- 24 Gew.-% bis 30 Gew.-% Industrieruß,
- 0,2 Gew.-% bis 1 Gew.-% Polyethylenglykol 4.000 und
- optional 9 Gew.-% bis 13 Gew.-% weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile.

Gemäß einem zweiten Aspekt betrifft die Erfindung einen Fahrradschlauch.

Der Fahrradschlauch weist eine Zusammensetzung gemäß erstem Erfindungsaspekt auf oder besteht aus einer solchen Zusammensetzung.

Bezüglich weiterer Merkmale und Vorteile der Zusammensetzung sowie des Fahrradschlauches wird vollständig auf die unter dem ersten Erfindungsaspekt beschriebenen Ausführungen Bezug genommen. Die dort insoweit beschriebenen Merkmale und Vorteile gelten sinngemäß auch für den Fahrradschlauch gemäß zweitem Erfindungsaspekt.

Gemäß einem dritten Aspekt betrifft die Erfindung einen Laufradschlauch.

Der Laufradschlauch weist eine Zusammensetzung gemäß erstem Erfindungsaspekt auf oder besteht aus einer solchen Zusammensetzung.

Bezüglich weiterer Merkmale und Vorteile der Zusammensetzung sowie des Laufradschlauches wird vollständig auf die unter dem ersten Erfindungsaspekt beschriebenen Ausführungen Bezug genommen. Die dort insoweit beschriebenen Merkmale und Vorteile gelten sinngemäß auch für den Laufradschlauch gemäß drittem Erfindungsaspekt.

Gemäß einem vierten Aspekt betrifft die Erfindung einen Kinderwagenreifenschlauch.

Der Kinderwagenreifenschlauch weist eine Zusammensetzung gemäß erstem Erfindungsaspekt auf oder besteht aus einer solchen Zusammensetzung.

Bezüglich weiterer Merkmale und Vorteile der Zusammensetzung sowie des Kinderwagenreifenschlauches wird vollständig auf die unter dem ersten Erfindungsaspekt beschriebenen Ausführungen Bezug genommen. Die dort insoweit beschriebenen Merkmale und Vorteile gelten sinngemäß auch für den Kinderwagenreifenschlauch gemäß viertem Erfindungsaspekt.

Gemäß einem fünften Aspekt betrifft die Erfindung einen Rollstuhlreifenschlauch.

Der Rollstuhlreifenschlauch weist eine Zusammensetzung gemäß erstem Erfindungsaspekt auf oder besteht aus einer solchen Zusammensetzung.

Bezüglich weiterer Merkmale und Vorteile der Zusammensetzung sowie des Rollstuhlreifenschlauches wird vollständig auf die unter dem ersten Erfindungsaspekt beschriebenen Ausführungen Bezug genommen. Die dort insoweit beschriebenen Merkmale und Vorteile gelten sinngemäß auch für den Rollstuhlreifenschlauch gemäß fünftem Erfindungsaspekt.

Gemäß einem sechsten Aspekt betrifft die Erfindung die Verwendung einer Zusammensetzung gemäß erstem Erfindungsaspekt für einen Fahrradschlauch, Laufradschlauch, Kinderwagenreifenschlauch oder Rollstuhlreifenschlauch und/oder zur Herstellung eines Fahrradschlauches, Laufradschlauches, Kinderwagenreifenschlauches oder Rollstuhlreifenschlauches.

Bezüglich weiterer Merkmale und Vorteile der Zusammensetzung sowie des Fahrradschlauches, Laufradschlauches, Kinderwagenreifenschlauches und Rollstuhlreifenschlauches wird ebenfalls vollständig auf die unter dem ersten Erfindungsaspekt gemachten Ausführungen Bezug genommen. Die dort insoweit beschriebenen Merkmale und Vorteile gelten sinngemäß auch für die Verwendung gemäß sechstem Erfindungsaspekt.

Weitere Merkmale und Vorteile der Erfindung ergeben sich aus den Ansprüchen sowie aus der nachfolgenden Beschreibung von bevorzugten Ausführungsformen der Erfindung anhand von Ausführungsbeispielen. Dabei können Merkmale der Erfindung jeweils für sich alleine oder in Kombination miteinander verwirklicht sein. Die nachfolgend beschriebenen Ausführungsbeispiele dienen der weiteren Erläuterung der Erfindung, ohne diese hierauf zu beschränken.

### BEISPIELTEIL

### 1. Herstellung erfindungsgemäßer Zusammensetzungen

### Es wurden die beiden nachfolgenden, als "Test-Mischung 1" und "Test-Mischung 2" bezeichneten Zusammensetzungen hergestellt:

**Tabelle 1: erfindungsgemäße Zusammensetzungen**

| **Bestandteil** | **Test-Mischung 1** | **Test-Mischung 2** |
|---|---|---|
| Butylkautschuk | 53% Gew.-% | 52% Gew.-% |
| zurückgewonnener Ruß ("recovered Carbon Black") | 7% Gew.-% | 5% Gew.-% |
| Industrieruß | 28% Gew.-% | 26% Gew.-% |
| Schichtsilikat | 0% Gew.-% | 5% Gew.-% |
| PEG 4.000 | 1% Gew.-% | 1% Gew.-% |
| Weitere Bestandteile (Zinkoxid, Fettsäure, Prozess-Öl, Paraffinwachse und Kohlenwasserstoffwachse, Antioxidans, mikrokristallines Wachs, Schwefel, Vulkanisationsbeschleuniger) | 11% Gew.-% | 11% Gew.-% |
| **SUMME** | **100%** Gew.-% | **100%** Gew.-% |

Zur Herstellung der Zusammensetzungen "Test-Mischung 1" und "Test-Mischung 2" wurden_die in Tabelle 1 wiedergegebenen Bestandteile entsprechend ihren jeweiligen Anteilen in einem Innenmischer vermengt.

### 2. Weiterverarbeitung zu Prüfplatten

Die gemäß 1. hergestellten Zusammensetzungen "Test-Mischung 1" und "Test-Mischung 2" wurden in einer Heizpresse in eine Form gepresst und zu Gummi-Prüfplatten vulkanisiert. Die vulkanisierten Prüfplatten stellten die Probekörper für die im folgenden Abschnitt beschriebenen Gasdichtigkeitstests dar.

### 3. Gasdichtigkeitstests

Die gemäß 2. hergestellten vulkanisierten Prüfplatten wurden in einem Laboraufbau auf ihre Gasdichtigkeit getestet. Im Rahmen der Gaspermeationstests wurden die vulkanisierten Prüfplatten von einer Seite mit einem Druck von 5,0 bar beaufschlagt, die andere Seite des Aufbaus stand unter Atmosphärendruck. Gemessen wurde der Gasdurchfluss in [mbar*l/s], das heißt das Gasvolumen, das unter besagtem Druckgradienten pro Sekunde durch die Prüfplatte diffundiert.

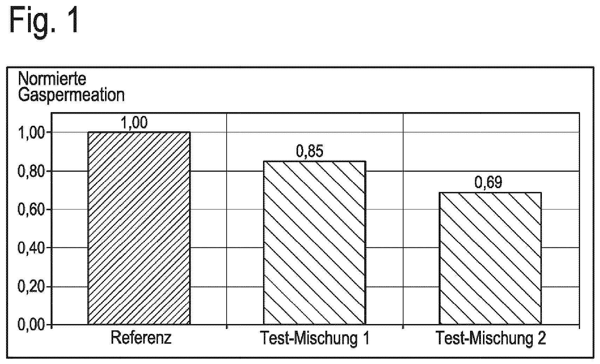

Als Referenz wurde eine standardmäßige Butyl-Schlauchmischung der Anmelderin (Referenz) herangezogen, die einen gängigen Marktdurchschnitt widerspiegelt. Die Referenz wurde im Laboraufbau auf ihre Gaspermeation getestet. Die Messwerte wurden als Referenz mit dem Wert "1,0" festgelegt. Die gemessene Gaspermeation der hergestellten Prüfplatten aus den Zusammensetzungen "Test-Mischung 1" und "Test-Mischung 2" wurde auf die Referenz normiert. Das Ergebnis ist in Fig. 1 zusammengefasst.

Die Figur 1 zeigt grafisch, dass unter Verwendung der erfindungsgemäßen Zusammensetzungen "Test-Mischung 1" und "Test-Mischung 2" eine Erhöhung der Gasdichtigkeit erzielt werden konnte. Hervorzuheben ist außerdem, dass sich die Verbesserung der Gasdichtigkeit nicht negativ auf die physikalischen Eigenschaften der vulkanisierten Materialien auswirkt. Die gemessenen Werte wie Härte, 100 %-Modul, 300 %-Modul, Zugfestigkeit, Bruchdehnung und Reißfestigkeit entsprachen denen der untersuchten Standard-Butylschläuche.

## Patentansprüche

1. Fahrradschlauch, aufweisend eine Zusammensetzung, enthaltend
- einen Synthesekautschuk und
- zurückgewonnenen Ruß,
wobei der Synthesekautschuk einen Anteil von 40 Gew.-% bis 70 Gew.-% aufweist, bezogen auf das Gesamtgewicht der Zusammensetzung, und der zurückgewonnene Ruß einen Anteil von ≤ 50 Gew.-% aufweist, bezogen auf das Gesamtgewicht von in der Zusammensetzung enthaltenen Füllstoffen.

2. Fahrradschlauch nach Anspruch 1, **dadurch gekennzeichnet, dass** der zurückgewonnene Ruß einen Anteil von 5 Gew.-% bis 35 Gew.-%, insbesondere 10 Gew.-% bis 30 Gew.-%, bevorzugt 15 Gew.-% bis 25 Gew.-%, besonders bevorzugt 17 Gew.-% bis 22 Gew.-%, aufweist, bezogen auf das Gesamtgewicht von in der Zusammensetzung enthaltenen Füllstoffen auf.

3. Fahrradschlauch nach Anspruch 1 oder 2, **dadurch gekennzeichnet, dass** die Zusammensetzung ferner Industrieruß als weiteren Füllstoff enthält.

4. Fahrradschlauch nach Anspruch 3, **dadurch gekennzeichnet, dass** der Industrieruß einen Anteil von 65 Gew.-% bis 95 Gew.-%, insbesondere 70 Gew.-% bis 90 Gew.-%, bevorzugt 75 Gew.-% bis 85 Gew.-%, besonders bevorzugt 78 Gew.-% bis 83 Gew.-%, aufweist, bezogen auf das Gesamtgewicht von in der Zusammensetzung enthaltenen Füllstoffen.

5. Fahrradschlauch nach einem der vorhergehenden Ansprüche, **dadurch gekennzeichnet, dass** die Zusammensetzung frei von einem Schichtsilikat wie Talkum, insbesondere frei von einem weiteren Füllstoff, ist.

6. Fahrradschlauch nach einem der vorhergehenden Ansprüche, **dadurch gekennzeichnet, dass** der Synthesekautschuk ausgewählt ist aus der Gruppe bestehend aus Butylkautschuk, Halobutylkautschuk, Kautschuke auf Dienbasis, Kautschuk auf Isoprenbasis, Butadienkautschuk, Styrol-Butadien-Kautschuk, Styrol-Isopren-Butadien-Kautschuk, Chloroprenkautschuk, Acrylnitril-Butadien-Kautschuk, Kautschuke auf Nicht-Dien-Basis, hydrierter Nitrilkautschuk, Ethylen-Propylen-Kautschuk, Silikonkautschuk, Polyethylenchlorid-Kautschuk, Fluorkautschuk, Acrylkautschuk, epoxidierter Naturkautschuk, hydrierter Naturkautschuk, gepfropfter Naturkautschuk und Mischungen von wenigstens zwei der vorgenannten Synthesekautschuke.

7. Fahrradschlauch nach einem der vorhergehenden Ansprüche, **dadurch gekennzeichnet, dass** es sich bei dem Synthesekautschuk um Butylkautschuk handelt.

8. Fahrradschlauch nach einem der vorhergehenden Ansprüche, **dadurch gekennzeichnet, dass** der Synthesekautschuk einen Anteil von 45 Gew.-% bis 65 Gew.-%, bevorzugt 50 Gew.-% bis 55 Gew.-%, aufweist, bezogen auf das Gesamtgewicht der Zusammensetzung.

9. Fahrradschlauch nach einem der vorhergehenden Ansprüche, **dadurch gekennzeichnet, dass** die Zusammensetzung ferner ein Dispergiermittel aufweist.

10. Fahrradschlauch nach Anspruch 9, **dadurch gekennzeichnet, dass** es sich bei dem Dispergiermittel um ein Polyethylenglykol, vorzugsweise Polyethylenglykol 4.000, handelt.

11. Fahrradschlauch nach Anspruch 9 oder 10, **dadurch gekennzeichnet, dass** das Dispergiermittel einen Anteil von 0,1 Gew.-% bis 2 Gew.-%, insbesondere 0,2 Gew.-% bis 1 Gew.-%, bevorzugt 0,4 Gew.-% bis 0,8 Gew.-%, besonders bevorzugt 0,4 Gew.-% bis 0,6 Gew.-%, aufweist, bezogen auf das Gesamtgewicht der Zusammensetzung.

12. Fahrradschlauch nach einem der vorhergehenden Ansprüche, **dadurch gekennzeichnet, dass** die Zusammensetzung Folgendes enthält:
- Butylkautschuk,
- zurückgewonnenen Ruß,
- Industrieruß,
- Polyethylenglykol 4.000 und
- optional weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile.

13. Fahrradschlauch nach einem der vorhergehenden Ansprüche, **dadurch gekennzeichnet, dass** die Zusammensetzung auf 100 Gew.-% Folgendes enthält:
- 50 Gew.-% bis 55 Gew.-% Butylkautschuk,
- 5 Gew.-% bis 8 Gew.-% zurückgewonnenen Ruß,
- 24 Gew.-% bis 30 Gew.-% Industrieruß,
- 0,2 Gew.-% bis 1 Gew.-% Polyethylenglykol 4.000 und
- optional 9 Gew.-% bis 13 Gew.-% weitere Bestandteile, insbesondere ausgewählt aus der Gruppe bestehend aus Vulkanisationsmittel, Vulkanisationsbeschleuniger, Prozesshilfen, Prozessöle, Alterungsschutzmittel, Stearinsäure, Wachse und Mischungen von wenigstens zwei der vorgenannten weiteren Bestandteile.
